# FASCICULE DE BREVET EUROPEEN

(11) **EP 4 149 672 B1**
(45) Date de publication et mention de la délivrance du brevet: **03.04.2024**
(21) Numéro de dépôt: 21724300.5
(22) Date de dépôt: 10.05.2021
(51) Int. Cl.: B01J 20/22, B01J 20/28, B01J 20/32, B01J 20/34, B01D 53/02, B01D 53/14, B01D 39/02, B01D 39/14, B01D 39/06, B01D 35/18

(54) **ELEMENT DE FILTRATION POUR FLUIDES GAZEUX**
FILTERELEMENT FÜR GASFÖRMIGE FLUIDE
FILTER ELEMENT FOR GASEOUS FLUIDS

(30) Priorité: 11.05.2020 FR 2004619
(43) Date de publication de la demande: 22.03.2023
(73) Titulaire: Commissariat à l'Energie Atomique et aux Energies Alternatives, 75015 Paris (FR)
(72) Inventeur: PONCELET, Olivier, 38054 GRENOBLE CEDEX 09 (FR); BABLET, Jacqueline, 38054 GRENOBLE CEDEX 09 (FR); DELLEA, Olivier, 38054 GRENOBLE CEDEX 09 (FR)
(74) Mandataire: Cabinet Nony
(86) Numéro de dépôt international: PCT/EP2021/062380
(87) Numéro de publication internationale: WO 2021/228792

(56) Documents cités:
- WO-A1-2018/091379
- CN-A- 107 541 241
- CN-A- 107 715 845
- CN-A- 110 448 996
- Jiaming Mao ET AL: "Efficient Adsorption of Hydrogen Sulfide at Room Temperature Using Fumed Silica-supported Deep Eutectic Solvents", Aerosol and Air Quality Research, vol. 20, no. 1, 1 janvier 2020 (2020-01-01), pages 203-2015, XP055764249, ISSN: 1680-8584, DOI: 10.4209/aaqr.2019.10.0520
- PATRYCJA MAKOS ET AL: "Silica Gel Impregnated by Deep Eutectic Solvents for Adsorptive Removal of BTEX from Gas Streams", MATERIALS, vol. 13, no. 8, 17 avril 2020 (2020-04-17) , page 1894, XP055764288, CH ISSN: 1996-1944, DOI: 10.3390/ma13081894
- DEZHONG YANG ET AL: "SO 2 absorption in EmimCl-TEG deep eutectic solvents", PHYSICAL CHEMISTRY CHEMICAL PHYSICS, vol. 20, no. 22, 2 mai 2018 (2018-05-02), pages 15168-15173, XP055768133, ISSN: 1463-9076, DOI: 10.1039/C8CP02250J
- SHAOYANG SUN ET AL: "Efficient SO 2 Absorptions by Four Kinds of Deep Eutectic Solvents Based on Choline Chloride", INDUSTRIAL & ENGINEERING CHEMISTRY RESEARCH, vol. 54, no. 33, 26 août 2015 (2015-08-26) , pages 8019-8024, XP055388280, ISSN: 0888-5885, DOI: 10.1021/acs.iecr.5b01789

## Description

### Domaine technique

La présente invention se rapporte au traitement d'un fluide gazeux et plus particulièrement d'un air ambiant en vue de le purifier de ses polluants gazeux et plus particulièrement des NOx et aldéhydes.

Les nouvelles contraintes réglementaires sur la consommation énergétique du bâtiment conduisent à un taux de renouvellement d'air faible dans les bâtiments et posent donc le problème de la purification de leur atmosphère intérieure. Il est en effet généralement constaté dans l'air ambiant de ces espaces confinés, une accumulation de particules solides (générées par le chauffage urbain, la circulation de l'air ambiant dans des gaines de ventilation ou l'usure des pâles des ventilateurs, voire la combustion incomplète des carburants dans le cas des parkings couverts par exemple) de bio-contaminants comme les micro-organismes (virus et bactéries) et les allergènes et également de polluants chimiques gazeux (issus de la désorption des produits de l'habitat, provenant de l'extérieur (NOx, ozone, dioxine, aromatiques) et/ou générés par les usagers de ces espaces (cosmétiques, respiration, etc..)).

Parmi les polluants gazeux, les oxydes d'azote sont particulièrement préoccupants. Issus de phénomènes de combustion, leurs seuils limites, fixés par l'ANSES entre 10 et 1000µg/m³, sont régulièrement dépassés et il importe donc de les réduire pour rétablir un seuil acceptable.

### Technique antérieure

La diminution de ces polluants gazeux relève donc d'une préoccupation constante et de nombreuses technologies notamment en termes de filtration ont déjà été développées à cet égard.

Parmi celles-ci, deux techniques prédominent, la première est une technique d'adsorption physique et la seconde repose sur la chemisorption.

La technique d'adsorption physique consiste à faire circuler le gaz à purifier sur un matériau filtrant où il va s'adsorber par liaison faible de type Van der Walls ou liaison hydrogène. L'efficacité de piégeage est donc fonction du débit, du temps de contact au matériau filtrant, de la surface disponible de ce matériau (charbon de bois, silice, diatomée, etc..) et de l'ingénierie mise en place pour optimiser le contact entre le flux d'air à traiter et le matériau filtrant. Il s'agit de la technologie la plus utilisée. Toutefois elle ne donne pas totale satisfaction notamment au regard de la nature des interactions chimiques qui fixent les polluants au matériau filtrant et qui peuvent ne pas être sélectives au(x) polluant(s) à filtrer de l'atmosphère ambiante. L'air est en effet composé principalement d'azote, d'oxygène, de vapeur d'eau et de CO₂. Or, ces deux derniers composants peuvent entrer en compétition d'affinité chimique avec les polluants versus le matériau filtrant, voire provoquer leur relargage du matériau filtrant dans l'air. Ce risque existe tout particulièrement avec l'eau dont la teneur peut être significative selon le taux d'humidité ambiant. Ce même phénomène de compétition peut également être observé à l'égard des molécules organiques volatiles (VOC) présentes dans les vapeurs de solvants provenant de peinture ou de formulation cosmétique ou même de cuisine. Lors de leur mise au contact avec le matériau filtrant contenant des polluants adsorbés, ces VOC sont susceptibles de déplacer les polluants adsorbés et donc de provoquer leur relargage dans l'air ambiant. Ce risque est en outre exacerbé lorsque le matériau filtrant est très chargé en polluants.

La technique dite de chemisorption repose en revanche sur la formation d'une liaison forte du type covalente ou ionique entre le polluant et le matériau filtrant. Cette approche permet donc de prévenir tout risque de relargage des polluants puisque ceux-ci sont fixés le plus souvent de manière covalente à la surface du matériau filtrant.

L'utilisation de matériaux appelés solvants eutectiques profonds (« Deep eutectic solvents » en anglais ou dits encore DES), notamment tels que décrits dans les documents [1 à 4] s'avère tout particulièrement intéressante à ce titre.

A l'image des liquides ioniques, ces matériaux d'une part, s'avèrent aptes à établir des liaisons généralement covalentes, à pression atmosphérique et température ambiante et d'autre part possèdent des propriétés physico-chimiques très intéressantes à savoir une très faible tension de vapeur et donc sont non volatils, incapables de générer des produits volatiles jusqu'à 200°C et dénués d'odeur. En revanche, les DES sont, par opposition aux liquides ioniques, constitués de composés plus respectueux de l'environnement et leur procédé de préparation ne nécessite aucune étape de purification. Structurellement, les DES sont généralement composés de deux ou trois constituants qui sont capables d'auto-association, souvent par des liaisons hydrogène, pour former un mélange eutectique présentant un point de fusion inférieur à celui de chaque constituant considéré individuellement. Ils consistent généralement en un mélange d'un composé accepteur de liaison hydrogène, également nommé HBA, et d'un composé donneur de liaison hydrogène, également nommé HBD. Il est donc avantageusement possible d'ajuster la nature chimique d'un DES, via ses composants HBA et HBD, pour lui conférer une réactivité sélective à l'égard d'un ou plusieurs polluants spécifiques. Par exemple, l'un des composants du DES peut être spécifiquement choisi pour posséder dans sa structure chimique, une fonction réactive à l'image d'une amine pour piéger des aldéhydes ou encore d'un motif aromatique pour piéger des composés aromatiques volatils. Un DES peut en outre être dopé avec un hydroxyde de métal électropositif ou de transition pour lui conférer une capacité à piéger des NOx ou de l'ozone voire des produits acides de combustion.

Toutefois, cette technologie d'adsorption mettant à profit les DES demeure malheureusement limitée en termes de capacité de masse filtrante car tributaire de l'accessibilité des sites réactifs pour les molécules à piéger. Ainsi, il est clair que, sur la durée d'utilisation, la disponibilité des sites réactifs est progressivement gênée par l'encombrement des sites ayant déjà interagi avec des molécules du polluant à piéger. Une grande partie des polluants devient alors incapable d'interagir avec ces sites réactifs et est soit, au mieux, adsorbée à la surface avec le risque d'être libérée au cours de la vie du matériau filtrant soit pas du tout adsorbée et demeure alors présente dans le flux d'air présumé traité et donc s'avérant en fait non totalement purifié. Cette limitation oblige donc à renouveler fréquemment l'élément filtrant avec un surplus de coût significatif pour l'utilisateur final.

Mao *et al.* divulgue un élément de filtration utile pour piéger le sulfure d'hydrogène, ledit élément de filtration comportant au moins un DES et un support solide en silice pyrogénée, sur lequel est immobilisé ledit DES [6].

### Exposé de l'invention

L'objet de l'invention est précisément de remédier à cette limitation.

Plus particulièrement, la présente invention vise à proposer un moyen pour optimiser significativement la capacité filtrante des DES, à l'égard de polluants et notamment ambiants.

Un autre but de la présente invention est de proposer un ensemble de purification d'air présentant une durée de vie améliorée.

Enfin, un autre but de la présente invention est de proposer un ensemble de purification d'air offrant un coût limité et d'installation et utilisation aisées.

Ainsi la présente invention concerne à titre principal, un élément de filtration utile pour piéger un ou plusieurs polluants gazeux, en particulier choisis parmi les NOx, SO₂, aldéhydes et cétones, ledit élément de filtration comportant au moins un solvant eutectique profond (DES) possédant un point de fusion supérieur ou égal à 45°C et un support solide sur lequel est immobilisé ledit DES avec ledit élément étant configuré pour chauffer ledit DES à une température propice à sa fusion.

Plus particulièrement, la présente invention concerne un élément de filtration utile pour piéger un ou plusieurs polluants gazeux, en particulier choisis parmi les NOx, SO₂, aldéhydes et cétones, ledit élément de filtration comportant au moins un solvant eutectique profond (DES) possédant un point de fusion supérieur à 60°C et un support solide sur lequel est immobilisé ledit DES avec ledit élément étant configuré pour chauffer ledit DES à une température propice à sa fusion.

Les inventeurs ont ainsi constaté que l'utilisation d'un DES de point de fusion contrôlé, à titre d'élément capteur, selon les conditions requises selon l'invention s'avère tout particulièrement intéressante. Son chauffage jusqu'à fusion permet de renouveler efficacement sa surface active à l'égard des polluants à piéger. Plus précisément, des turbulences ou encore de la convection sont générées, par chauffage, au sein du DES fondu et, lors de son refroidissement consécutif, le DES se fige en surface en générant une nouvelle interface réactive, prête à réagir avec les polluants gazeux. La fréquence de rafraichissement de l'interface du DES exposée au fluide gazeux à purifier peut en outre être aisément ajustée au niveau de pollution et notamment contrôlée.

Avantageusement, l'élément de filtration est configuré pour être traversable par le fluide gazeux à purifier.

Avantageusement, l'élément de filtration est configuré pour chauffer ou permettre de chauffer tout ou partie du DES par convection, conduction et/ou par rayonnement et de préférence par convection.

Avantageusement le DES est immobilisé au niveau de pores ou orifices ménagées dans le support solide. Un tel support est qualifié de poreux au sens de l'invention.

Dans un mode de réalisation particulier, le support solide est un élément conducteur électrique ou thermique, inerte chimiquement vis-à-vis du DES et apte à chauffer tout ou partie du DES immobilisé sur le support.

Dans un autre mode de réalisation particulier, l'élément de filtration comporte un élément conducteur électrique ou thermique distinct du support et disposé au contact dudit support, ledit élément étant inerte chimiquement vis-à-vis du DES, et apte à chauffer tout ou partie du DES immobilisé sur le support.

Selon un mode de réalisation avantageux, l'élément de filtration permet de travailler à perte de charge minimisée. Cette perte de charge réduite est tout particulièrement avantageuse sur un plan phonique et donc appréciable pour les usages domestiques de l'élément de filtration conforme à l'invention. Pour optimiser cet effet, la géométrie de l'élément de filtration peut ainsi être adaptée de manière à intégrer par exemple des ouvertures d'évents à ressort dès que la pression augmente trop dans l'élément de filtration.

La présente invention concerne également une cartouche de filtration d'air comportant au moins un élément de filtration conforme à l'invention.

Selon une variante particulière, la cartouche est adaptée pour chauffer, avantageusement de manière contrôlée et en particulier de manière modulable, tout ou partie du DES dudit élément jusqu'à fusion.

La présente invention vise en outre l'utilisation d'un élément de filtration ou d'une cartouche de filtration conforme à l'invention pour purifier un air en particulier ambiant et notamment dans un environnement domestique.

La présente invention a également pour objet un procédé de purification d'air comprenant la mise en contact de l'air à purifier avec le DES, le cas échéant à l'état fondu, d'un élément de filtration selon l'invention.

Plus précisément, le procédé comprend au moins les étapes consistant à
a) Disposer d'un élément de filtration selon l'invention,
b) Mettre en contact tout ou partie du DES dudit élément avec un flux d'air et
c) Chauffer tout ou partie du DES jusqu'à fusion,
l'étape c) étant réalisée de manière non continue, en particulier de manière alternée avec un refroidissement dudit DES jusqu'à solidification.

Ainsi, le procédé alterne avantageusement des étapes de chauffage dudit DES pour le porter à un état fondu avec des étapes de refroidissement pour rétablir le DES fondu à un état solidifié.

Les étapes b) et c) peuvent être simultanées ou non.

La présente invention a également pour objet un ensemble de purification d'air comportant au moins
- une enceinte comprenant une entrée d'air pour le passage d'un air pollué et une sortie d'air pour le passage d'un air purifié
- un système de ventilation pour imposer une circulation d'air forcée entre l'entrée d'air et la sortie d'air,
- au moins un élément de filtration conforme à l'invention logé dans ladite enceinte de manière à être traversé par de l'air circulant entre l'entrée d'air et la sortie d'air et
- le cas échéant au moins un moyen de chauffage configuré pour chauffer jusqu'à fusion, tout ou partie du DES dudit élément de filtration.

Selon une variante de réalisation, l'ensemble comporte, à titre de moyen de chauffage une source IR et/ou un élément métallique chauffable par effet Joule, par exemple une mousse ou un fritté métallique, en particulier disposé(s) dans ladite enceinte.

Selon une variante particulière, l'élément de filtration est mis en oeuvre, dans l'ensemble selon l'invention, sous la forme d'une cartouche amovible, notamment d'une cartouche amovible conforme à l'invention.

Cette cartouche amovible est adaptée à l'enceinte et au système de ventilation afin de pouvoir être traversée par l'air pollué circulant dans l'enceinte.

En particulier, la cartouche amovible est disposée dans l'enceinte de manière à exposer l'élément de filtration qu'elle contient, et en particulier tout ou partie du DES dudit élément de filtration, au chauffage généré par le moyen de chauffage.

Selon une variante de réalisation, l'enceinte peut contenir plusieurs cartouches amovibles conformes à l'invention, toutes adaptées à l'enceinte et au système de ventilation afin de pouvoir être traversées par l'air vicié circulant dans l'enceinte. Chacune de ces cartouches peut être ou non dédiées au captage d'un polluant spécifique.

Selon une première variante, elles peuvent être disposées en série au sein de l'enceinte. Selon une autre variante, elles peuvent être disposées en parallèle au sein de l'enceinte.

Selon une autre variante de réalisation, l'ensemble selon l'invention peut également comprendre un ou plusieurs capteurs annexes spécifiques à un ou plusieurs polluants gazeux atmosphériques, situés en aval de l'élément de filtration. Un tel capteur est notamment utile pour indiquer une perte d'efficacité de l'élément de filtration notamment due à une saturation de ses sites de piégeage. Il indique ainsi la nécessité de procéder à un renouvellement de l'élément de filtration.

Bien entendu les précédentes différentes variantes de réalisation peuvent être combinées les unes aux autres.

### Brève description des dessins

[Fig 1] La figure 1 représente en perspective, de manière partielle et schématique, une cartouche amovible conforme à l'invention.
[Fig 2] La figure 2 représente, de manière partielle et schématique, un ensemble utile pour la purification de l'air conforme à l'invention.

### Description détaillée

### SOLVANT DES

Les DES convenant à l'invention possèdent une température de fusion (T_{f}) ou une température de transition vitreuse (T_{g}) supérieure ou égale à 45°C, en particulier supérieure à 60°C et inférieure à 100°C et plus particulièrement variant de 75°C à 80°C.

Le DES peut ainsi être à l'état solide dans l'élément de filtration notamment à la température ambiante de l'atmosphère considérée. En particulier et selon le pays considéré, cette température ambiante peut notamment varier de 18 à 40°C.

Tout ou partie du DES peut également être à l'état fondu dans l'élément de filtration. Le DES à l'état fondu se présente toutefois sous une forme fluide apte à demeurer immobilisée sur le support et prévenir tout phénomène de coulage hors du support.

Ainsi, avantageusement, le DES à l'état fondu possède une viscosité supérieure à 5 mPa.s et inférieure à 5 000 mPa.s, de préférence variant de 10 mPa.s à 1 000 mPa.s mesurée à 30°C. Cette viscosité peut notamment être mesurée à l'aide d'un Stabinger Viscometer^{™}: SVM 3000 (Anton-Paar) à une température de 30°C.

Comme précisé ci-dessus, un DES convenant à l'invention combine au moins un composant dit donneur d'hydrogène, HBD, à au moins un composant dit accepteur d'hydrogène, HBA.

Chacun de ces composants peut être formé par un unique composé ou un mélange d'au moins deux composés.

Avantageusement, un DES convenant à l'invention comprend à titre de composant dit donneur d'hydrogène, HBD, au moins un acide hydrocarboné saturé de point de fusion variant de 30°C à 70°C.

Plus particulièrement, ce composant peut être choisi parmi les acides décanoïque, laurique et palmitique et leurs mélanges.

Avantageusement, un DES convenant à l'invention comprend à titre de composant dit accepteur d'hydrogène, HBA, au moins un composé choisi parmi les halogénures de tetraalkyle d'ammonium, les alkanolamides, et leurs mélanges. De préférence leurs motifs alkyle sont linéaires ou ramifiés et en C₁ à C₂₂.

Plus particulièrement, ce composant HBA peut être choisi parmi les chlorures et bromures d'alkylammonium et de préférence les chlorures de tétrabutyl ammnonium, méthyltrioctylammonium, tétraoctylammonium, et de tétraheptylammonium et les bromures d'éthyltrioctylammonium et de tétraoctylammonium.

Concernant les alkanolamides et en particulier les alkyldialkanolamides, ils peuvent notamment être choisis parmi les composés décrits dans le document US2014/01211141A1 de Chevron Oronite. Ces composés peuvent notamment être de formule RCONH(R')₂OH dans laquelle R représente un radical alkyle linéaire ou ramifié en C₁ à C₂₂ de préférence en C₈ à C₁₈ et les motifs R', identiques ou différents, un radical alkylène en C₂ à C₈. A titre représentatif de ces composés peut notamment être cité le diéthanolauramide.

Le rapport molaire entre les composants HBD et HBA, est avantageusement ajusté pour former un DES possédant une température de fusion conforme à l'invention.

De même ce rapport molaire peut être ajusté pour que la température envisagée pour la régénération des sites actifs de piégeage du DES via sa fusion, soit de préférence de 75 à 80°C.

Cet ajustement peut être réalisé via des systèmes binaires mais également ternaires d'un ou plusieurs composés HBD avec un ou plusieurs composés HBA.

Par exemple, ces composés HBD et HBA peuvent être combinés dans un rapport molaire HBD/HBA adéquat, par exemple allant de 1 :1 à 1 :12, de préférence de 1 :1 à 1 :6.

De même, ces composés HBD et HBA peuvent être combinés dans un rapport molaire HBD/HBA1/HBA2 de 1:0,5 :0,5.

Ces combinaisons de HBD et HBA peuvent également être établies de manière à garantir un caractère hydrophobe au DES ainsi constitué. A cette fin et dans le cas d'un mélange DES ternaire, il est intéressant de privilégier les HBD comme les acides carboxyliques linéaires (décanoïque, laurique, palmitique) et les HBA comme les halogénures de tetraalkyle d'ammonium et les alkanolamides et les alkyldialkanolamides.

Ces DES peuvent être préparés de manière connue de l'homme du métier.

Par exemple, ses composés HBD et HBA sont mélangés à l'état fondu dans un rapport molaire adéquat jusqu'à obtention d'un mélange homogène. Les DES ainsi obtenus sont ensuite caractérisés par la mesure de leur point de fusion.

A titre illustratif et non limitatif des DES convenant à l'invention, peuvent notamment être cités les mélanges HBD/HBA suivants avec leur rapport molaire correspondant :
- 2 acide décanoïque/ 1 bromure de tétraoctylammonium
- 2 acide décanoïque/ 0,5 bromure de tétraoctylammonium/0,5 acide laurique diéthanolamine.

Comme précisé ci-dessus les DES considérés selon l'invention sont efficaces pour piéger des polluants notamment des polluants atmosphériques et plus particulièrement NOx, SO₂, et les aldéhydes et cétones. A titre illustratif des aldéhydes et cétones pouvant être piégées par les DES considérés selon l'invention peuvent notamment être citées les formaldéhyde, acétaldéhyde, acétone, acroléine, propionaldéhyde, crotonaldéhyde, benzaldéhyde, hexaldéhyde, glyoxal, et methylglyoxal.

Selon une variante préférée, les DES considérés selon l'invention sont tout particulièrement dédiés au piégeage des NOx.

A des fins d'améliorer leur efficacité les DES considérés selon l'invention peuvent avantageusement être chargés ou encore dopés avec au moins un composé choisi parmi
- les alcoxydes en C₁ à C₈ d'un métal de transition ou du groupe III,
- les carboxylates en C ₃ à C₁₆ d'alcalino-terreux de préférence calcium ou magnésium, de métaux du groupe III de préférence l'aluminium, ou de métaux de transition de préférence le titane ou le zirconium,
- les hydroxydes d'alcalino-terreux, de métaux du groupe III de préférence l'aluminium, de lanthanides ou de métaux de transition et
- les carbonates d'alcalino-terreux de préférence calcium ou magnésium. Conviennent tout particulièrement les carbonates alcalinoterreux de formule M(CO₃)₂.

Il peut être intéressant de privilégier des alcoxydes de poids moléculaire faible en particulier inférieur à C4 car d'une part la quantité massique de métal par mole est plus élevée pour ce type de composés et d'autre part ces composés étant peu solubles et présentant une complexité moléculaire forte, ils sont plus faciles à manipuler (moins sensibles à l'air) lors de la fabrication du DES. Le groupement nButyle est précisément avantageux à ce titre pour les métaux du groupe 3 et les métaux de transitions, il assure une bonne solubilité de l'alcoxyde dans le DES tout en représentant un bon pourcentage massique en métal par mole.

Dans le cas des carboxylates, il est en revanche avantageux de privilégier les poids moléculaires élevés, par exemple au moins de C8 à C16. De tels carboxylates sont en effet avantageux pour préserver le fort caractère hydrophobe du DES. Lors de la réaction avec NO₂, ils ne vont pas libérer des acides à chaine courte comme par exemple l'acide acétique. De plus, lorsque l'acide ainsi libéré est apparenté à un HBD de la composition du DES alors sa présence est sans impact sur le point de fusion du DES.

Conviennent tout particulièrement à l'invention, à titre de dopant, les alcoxydes de calcium notamment de formule Ca(OR)₂ avec les groupements R, identiques ou différents, étant de préférence un radical alkyle linéaire ou ramifié en C2 à C8 et de préférence choisi parmi les radicaux méthyle, éthyle et de préférence éthylhexyle. Ainsi selon une variante de réalisation avantageuse, le DES de l'élément selon l'invention est dopé avec au moins un alcoxyde de calcium.

La charge du DES en un dopant est généralement réalisée par ajout du dopant considéré dans le DES fondu, sous agitation mécanique ou par ultra-sons. La quantité massique de dopant est ajustée selon la quantité de NOx à piéger et la viscosité maximale que l'on souhaite apporter au DES dopé (de cette viscosité dépendra l'étape d'imprégnation des porosités des particules de support). Ainsi, une poudre de carbonate d'alcalino-terreux ou de terres rares ou d'hydroxydes d'aluminium aura un impact non négligeable sur la viscosité du DES. De même la taille particulaire en D50 de ces dopants est avantageusement de 0,5 à 5µm.

Toutes les molécules de NOx entrant en contact avec la surface externe du DES avantageusement dopé sont efficacement piégées sous forme de nitrates métalliques. Sous l'impact de turbulences, ou encore convection, internes, dues au chauffage du DES jusqu'à fusion, les sites de piégeage ayant interagi peuvent être remplacés par d'autres sites n'ayant pas interagi. Plus précisément, ces mouvements de convection au sein du DES fondu permettent avantageusement d'orienter vers la surface du DES, des dopants n'ayant pas encore interagi avec un NOx, et donc d'optimiser l'efficacité de piégeage du DES dopé.

Le taux de charge du DES en dopant peut être avantageusement ajusté en fonction du taux moyen de NOx à piéger dans l'air et le cas échéant de la fréquence de remplacement envisagée pour l'élément de filtration selon l'invention.

Avantageusement, les DES convenant à l'invention sont hydrophobes. En particulier, ils sont dénués d'affinité pour l'eau et le dioxyde de carbone.

Les DES hydrophobes sont en effet tout particulièrement intéressants au regard de leur aptitude à être recyclés par mise en contact avec de l'eau. Ainsi, les nitrates métalliques formés entre les dopants du DES et le NOx de l'air ambiant, migrent au contact de l'eau, dans la phase aqueuse en regénérant un DES hydrophobe qui peut alors être récupéré, séché et redopé pour être réutilisé.

### SUPPORT DU DES

Dans le cadre de la présente invention, le DES est immobilisé sur un support poreux.

Comme précisé ci-dessus, un support poreux est au sens de l'invention un support dans lequel sont ménagées des pores et/ou des orifices. Ces pores et orifices sont tout particulièrement adaptées à l'immobilisation du DES notamment par imprégnation.

Bien entendu, ce support est réalisé dans un matériau mécaniquement inerte au chauffage, nécessaire à la fusion de DES qu'il intègre, et également chimiquement inerte vis-à-vis du DES associé.

Plus précisément, le matériau constitutif dudit support peut être organique, inorganique, métallique ou mixte, et peut être chauffé jusqu'à 200°C.

Avantageusement, il peut présenter une conductivité thermique élevée pour permettre à la chaleur de diffuser de la source de chaleur vers ses orifices contenant, le DES immobilisé. Par exemple, le support peut être formé d'au moins un matériau de conductivité thermique d'au moins 0,5 W/(m.K), en particulier d'au moins 1 W/(m.K), plus particulièrement d'au moins 10 W/(m.K) et encore plus particulièrement d'au moins 80 W.(m.K), voire d'au moins 200 W/(m.K).

Le matériau constitutif dudit support peut être inorganique et non métallique et notamment choisi parmi les zéolithes, à base d'alumine et/ou de silice, la silice et l'alumine.

Il peut être également organique et notamment choisi parmi les fibres naturelles, notamment creuses, comme par exemple les fibres naturelles de type Kapoc, ou les fibres synthétiques, comme par exemple les fibres de polyester ou de polyamide.

Il peut être également métallique et notamment choisi parmi les métaux et des alliages métalliques.

La nature chimique et les propriétés physiques du matériau constitutif du support conditionnent bien entendu le mode de chauffage adéquat pour obtenir la fusion du DES.

Selon une première variante, ce support solide dans lequel est imprégné le DES, est distinct de l'élément chauffant. En d'autres termes, il ne peut assurer le chauffage du DES associé sans le concours d'un élément chauffant qui lui est annexé. En particulier, l'élément de filtration comprend, en outre un élément chauffant.

Par exemple, le support solide peut être réalisé dans un matériau isolant électrique, notamment dans un matériau non métallique. Ainsi, sa conductivité thermique est de préférence d'au moins 1 W/(m.K).

A titre illustratif et non limitatif, des matériaux convenant pour ce type de support poreux, peuvent tout particulièrement être cités les zéolithes, à base d'alumine et/ou de silice, la silice, l'alumine, les fibres naturelles, notamment creuses, comme par exemple les fibres naturelles de type Kapoc, ou les fibres synthétiques, comme par exemple les fibres de polyester ou de polyamide. Il s'agit en particulier la zéolithe, la silice ou l'alumine.

Selon cette première variante, le support dans lequel est imprégné le DES peut aussi être un matériau conducteur électrique, notamment un métal ou un alliage métallique. De préférence, la conductivité thermique du matériau conducteur électrique est d'au moins 80 W/(m.K) et de préférence d'au moins 200 W/(m.K), permettant avantageusement un transfert de chaleur rapide au DES. Par exemple, le matériau conducteur électrique peut être choisi parmi le cuivre, l'aluminium, le nickel, l'argent, l'or, le fer, le laiton.

Selon une seconde variante, le support solide dans lequel est imprégné le DES, figure également l'élément chauffant. Il est dans ce cas de nature métallique.

De préférence, il est réalisé dans un matériau possédant une résistivité thermique élevée, en particulier d'au moins 1.10⁻⁷ Ohm.m, plus particulièrement variant de 1.10⁻⁷ Ohm.m à 1.10⁻⁴ Ohm.m. Un matériau de résistivité élevée est avantageusement capable d'être chauffé par effet Joule en lui appliquant un courant électrique. Conviennent tout particulièrement à ce titre, les métaux ou des alliages non oxydables notamment choisis parmi les Nichromes et les cupronickel.

En particulier, ce support peut notamment être réalisé en un alliage nichrome ou cupronickel, en particulier mis en oeuvre sous forme d'un fil tressé, formant en particulier une cotte de maille. Le cas échéant, ce type de fil peut en outre être émaillé pour les isoler électriquement du milieu extérieur.

Ces matériaux formant le support dans lequel est imprégné le DES peuvent se présenter sous la forme de particules, de filaments, de plaquettes, d'un fritté, d'un tissé, d'un fil, d'une surface plane, d'une mousse ou d'un grillage. La structure du support est propice à l'imprégnation du DES. Si le matériau n'est pas poreux, il est mis en oeuvre sous une forme permettant d'y ménager des cavités pour le DES, à l'image notamment d'une mousse, d'une grille, d'un tissage. Un tissage est tout particulièrement intéressant pour élaborer des structures 3D autoporteuses. Sa mise en oeuvre dans l'élément filtrant selon l'invention est aisée.

Selon un mode de réalisation particulier, le support dans lequel est imprégné le DES est organisé selon une architecture dites sandwich. Par exemple, un tel support peut être formé d'un matériau, métallique ou non, notamment de type tissage métallique ou mousse métallique, à large pores dédiées à être chargées en DES, et être intercalé entre 2 mousses métalliques non chargées en DES, de préférence à plus faible pores, dédiées à maintenir en place le DES chargé dans les larges pores et à lui procurer le chauffage à sa fusion. Ces mousses métalliques sont avantageusement très conductrices thermiquement et dérivent donc des métaux tels que le cuivre, nickel, aluminium, argent, or et leurs alliages et leur chaleur se propage au DES imprégné dans les pores connexes. Ces mousses sont chauffées par effet Joule par exemple via une mise en contact avec un métal très résistif tel que par exemple un alliage nichrome ou cupronickel.

En ce qui concerne l'élément chauffant, sa présence et son choix est dépendant de la nature du support associé.

A titre représentatif et non limitatif de ces éléments chauffants peuvent être cités les éléments chauffants résistifs comme par exemple les alliages nichrome ou cupronickel, les éléments à chauffants IR comme par exemple les fils d'inox. Il n'y a alors pas un contact direct entre l'élément chauffant et le DES à chauffer. En particulier, le matériau constituant cet élément chauffant résistif présente une résistivité électrique élevée, de préférence supérieure ou égale à 10⁻⁷ Ohm.m, et plus préférentiellement variant de 10⁻⁶ Ohm.m à 1.10⁻⁴ Ohm.m, mesurée à 300 K. Une telle résistivité permet d'optimiser l'effet Joule pour produire de la chaleur rapidement à basse tension. Le matériau de l'élément chauffant présente en particulier un point de fusion élevé, par exemple supérieur ou égal à 1200°C voire 1400°C pour le Nichrome ou 2400°C pour l'inox et n'est pas oxydable, même jusqu'à des températures élevées.

De préférence, l'élément de filtration comprend, à titre d'élément chauffant, au moins un alliage choisi parmi le nichrome et le cupronickel.

Selon un mode de réalisation particulier, le support poreux dans lequel est imprégné le DES est formé d'un matériau poreux inorganique non métallique, notamment une zéolithe qui est de préférence à l'état particulaire avec une taille moyenne en nombre pouvant varier de 20 µm à 3 mm. Un tel support est associé à un élément chauffant de type IR.

Selon un autre mode de réalisation particulier, le support dans lequel est imprégné le DES se présente sous la forme d'un matériau en mailles métalliques d'un métal résistif.

Selon encore un autre mode de réalisation particulier, le support poreux dans lequel est imprégné le DES se présente sous la forme d'une mousse métallique à base de nickel, cuivre, or ou argent et il est associé à un élément chauffant résistif. Selon une variante avantageuse, le support selon l'invention est hydrophobe. Cette hydrophobicité peut être naturellement manifestée par le matériau constitutif du support à l'image des alumine et silice (zéolithe) disponibles à des grades hydrophobes. Cette hydrophobicité peut être également générée par un traitement annexe du matériau. Il peut ainsi s'agir d'un traitement de surface consistant à former un film externe hydrophobe via par exemple un greffage en surface d'entités hydrophobes.

Le DES est immobilisé sur le support généralement par imprégnation. La technique la plus simple d'imprégnation du matériau poreux est l'adsorption physique. Pour ce faire, le DES fondu, dopé ou non, est mis au contact du support poreux considéré. Cette imprégnation est avantageusement réalisée dans un équipement pressurisé selon plusieurs cycles de dépressurisation /pression. Lors de la phase de dépressurisation (0,5 bar), le gaz qui remplit les orifices du support à imprégner est éliminé et lors d'un retour en pression (2-3 bar), les orifices sont remplis avec le DES dopé. Ces cycles sont répétés, généralement au moins 3 fois.

Toutes ces étapes, sont effectuées à une température qui permet de disposer du DES à l'état fondu et n'affecte pas l'intégrité de DES. D'une manière générale, cette température est identique ou légèrement supérieure à la température du DES à imprégner et de préférence de l'ordre de 100°C ou inférieure.

Pour diminuer la viscosité du DES dopé fondu et donc faciliter le remplissage du réseau « poreux » du support, il peut être avantageux de privilégier une température élevée demeurant bien sûr compatible avec l'intégrité du DES. Cette technique permet de remplir des pores hydrophiles (matériaux macroporeux). Pour remplir des pores très petits (matériaux mésoporeux et matériaux microporeux), surtout dans le cas des matériaux microporeux, il est avantageux de considérer des pores hydrophobes.

Il est évident que ce taux d'imprégnation en DES peut être ajusté. D'une manière générale, il est toutefois avantageusement ajusté entre 10 et 15% en poids du poids total du support poreux.

Avantageusement, le support chargé en DES s'avère aisé à manipuler.

En particulier, le matériau constitutif dudit support se présente sous la forme de particules. Ainsi dans le cas d'un support particulaire, ses particules chargées en DES peuvent être manipulées comme des charges filtrantes classiques. Elles peuvent par exemple être compressées entre des filtres ou en surface d'un charbon actif voire être intégrées dans un étage spécifique d'un filtre complexe ou encore être disposées au sein d'une cartouche à travers laquelle circule l'air à purifier.

### CARTOUCHE DE FILTRATION

Selon un autre de ses aspects, la présente invention vise une cartouche de filtration d'air comportant au moins un élément de filtration conforme à l'invention.

Une cartouche selon l'invention est adaptée pour permettre le chauffage jusqu'à fusion de tout ou partie du DES de l'élément de filtration qu'elle contient.

En particulier, la cartouche peut inclure un moyen de chauffage adapté pour chauffer jusqu'à fusion tout ou partie du DES dudit élément.

Elle est également adaptée pour être traversée par le fluide gazeux et plus particulièrement de l'air à purifier.

Les cartouches selon l'invention peuvent également être adaptées pour s'insérer directement dans un porte-cartouche unitaire ou multiple.

L'invention s'étend également à des cartouches comportant plusieurs éléments de filtration dont certains pouvant être non conformes à l'invention.

Dans cette variante, ces éléments de filtration peuvent y être avantageusement agencés en étages. Ainsi, le premier élément de filtration au contact de l'air, peut être dédié à procurer une filtration grossière pour bloquer les poussières et microorganismes selon notamment une filtration assistée (filtre électrostatique), le second élément de filtration peut être un filtre EPA pour abattre les entités de petites tailles, les éléments de filtration consécutifs, dont au moins un élément de filtration conforme à l'invention, peuvent être dédiés respectivement à filtrer des polluants chimiques (produits organiques et gaz) spécifiques et en dernier étage, un élément de filtration dédié à filtrer les sous-produits organiques issus de l'évolution des produits chimiques et/ou gaz adsorbés dans les étages en amont.

Avantageusement cette cartouche peut être amovible.

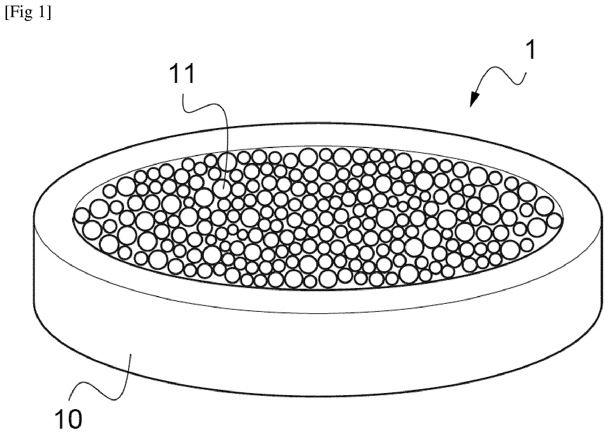

En figure 1, la cartouche 1 est formée d'un matériau conducteur thermique 10 et contient l'élément de filtration selon l'invention à l'état de particules poreuses 11 chargées en DES.

### ENSEMBLE DE PURIFICATION

Comme précisé ci-dessus, la présente invention vise en outre un ensemble de purification de l'air.

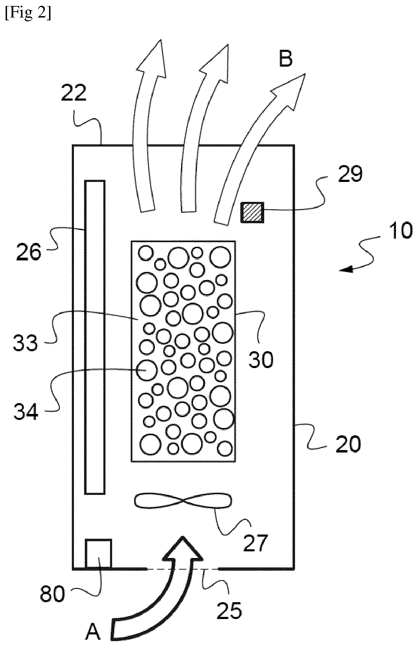

La figure 2 rend compte d'une illustration d'un tel ensemble.

L'ensemble de purification 10 se présente sous la forme d'une enceinte 20 qui comporte une entrée d'air 21 par laquelle l'air et ses polluants éventuels, désigné par la lettre A sur la figure 2, pénètre à l'intérieur de l'ensemble 10.

Le volume de l'enceinte 20 est adapté aux volumes d'air à traiter.

L'enceinte 20 comprend également une sortie d'air 22 pour le passage de l'air traité et purifié, désigné par la lettre B, sur la figure 2.

Elle renferme également un système de ventilation 27 tel qu'un moto ventilateur pour réaliser une circulation d'air forcée.

L'ensemble de purification 10 comprend, en outre, une cartouche 30 amovible 25, logée dans ladite enceinte 20 afin d'être traversée par l'air pollué A à purifier. Cette cartouche 30 à travers laquelle est organisée la circulation forcée de l'air pollué A à purifier comprend l'élément de filtration 33. Cet élément de filtration 33 comprend au moins des particules 34 d'un matériau sur lesquelles est immobilisé le DES.

Par ailleurs, dans une variante de réalisation non illustrée, l'ensemble de purification peut contenir plusieurs cartouches 30 disposées successivement sur le trajet de l'air A à purifier. Il est à noter que chaque cartouche 30 filtrante peut être spécifique à un polluant à fixer. Ainsi un opérateur pourra privilégier le choix d'une cartouche spécifique en fonction des besoins de purification de la pièce dans laquelle est placé l'ensemble de purification d'air 10.

L'ensemble de purification 10 comprend, en outre, un moyen de chauffage 26 tel qu'une source IR pour irradier les particules 34 contenues dans la cartouche 30 et élever leur température jusqu'à la température de fusion du DES.

Dans une autre variante de réalisation, non illustrée la cartouche 30, est formée au moins partiellement par un matériau conducteur électrique qui est parcouru par un courant électrique lorsque l'ensemble est relié à une alimentation électrique 80.

Concernant l'alimentation du système de ventilation 27 et du moyen de chauffage 26 un premier mode de réalisation prévoit une alimentation électrique 80 extérieure du type branchement sur secteur.

Dans un second mode de réalisation, l'élément de ventilation et le moyen de chauffage peuvent être alimentés par un accumulateur d'énergie. Dans une variante de réalisation de ce second mode, l'accumulateur d'énergie (non illustré) est maintenu en charge et rechargé par des moyens de production d'énergie électrique à partir d'énergie renouvelable, intégrés à l'ensemble.

Dans un exemple non limitatif, l'ensemble de purification d'air 10 peut comprendre des moyens de production d'énergie électrique à partir d'énergie photovoltaïque.

Ces moyens comprennent des moyens pour capter l'énergie photovoltaïque et pour la transformer en énergie électrique stockée dans l'accumulateur d'énergie, lequel est destiné à fournir l'énergie nécessaire au moyen de chauffage. Grâce à de tels moyens de production d'énergie électrique à partir d'énergie renouvelable, on dispose d'un ensemble de purification d'air économe en énergie.

L'ensemble comprend également un élément électronique de commande 26 de ses différents éléments constitutifs. Cet élément électronique de commande peut comprendre des moyens de mise en marche de l'ensemble de purification d'air 10. Il peut également comprendre des moyens de déclenchement automatique dudit ensemble 10 lorsque le taux de pollution de l'air du lieu, dans lequel est placé l'ensemble 10, atteint un certain seuil de pollution, ces moyens 30 de déclenchement étant associés à un ou plusieurs capteurs pouvant être également présents dans l'enceinte.

Par ailleurs, l'enceinte 20 peut comprendre une grille de protection 25 destinée à refermer l'enceinte 20 et enfermer la cartouche 30 de filtration.

Cette grille de protection 25 est fixée par tout moyen adapté à l'enceinte 20. Elle peut également être adaptée pour servir de protection à la cartouche 30 filtrante. Elle peut aussi être adaptée pour, en regard de la circulation du flux d'air A à travers l'ensemble 10, être utilisée comme entrée d'air 21 pollué ou sortie d'air 22 purifié de l'enceinte 20 de l'ensemble.

Dans une variante de réalisation non illustrée, l'ensemble 10 de purification peut intégrer une pluralité de technologies annexes efficaces pour le traitement de différentes classes de polluants de l'air de l'habitat intérieur où il est disposé.

Ainsi, par exemple, il peut comporter en outre un module de filtration particulaire disposé en amont dudit élément.

Il peut également comporter en outre un capteur annexe de NOx 29 situé en aval de l'élément de filtration. Un tel capteur est avantageux pour renseigner du niveau de piégeage de la cartouche disposée en amont et indiquer ainsi si elle est à remplacer.

Les éléments de filtration, cartouche et ensemble de purification d'air selon l'invention trouvent une application dans tous les secteurs dans lesquels il existe un besoin de maîtriser la qualité de l'air ambiant d'un espace confiné et s'applique particulièrement à la purification de l'air intérieur dans tous lieux de vie, privés ou collectifs tels que les bâtiments d'habitation, les grandes surfaces, les aéroports, les bureaux, les établissements médico-sociaux, les crèches, les hôpitaux, les commerces, les maisons individuelles, les transports, les salles de gymnastique. Il peut également s'agir d'espace de vie confiné comme par exemple ceux existant dans des laboratoires dits salles blanches, les sous-marins, les chars de combat et vaisseaux spatiaux.

Les exemples qui suivent sont présentés à titre illustratif et non limitatif du domaine de l'invention.

### EXEMPLES

### Exemple 1 : Préparation d'un DES (n-butyl-urée, urée et chlorure de choline)

700g de DES sont préparés comme suit :
Du n-butyl-urée, de l'urée et du chlorure de choline sont mélangés en quantité équimolaire (116,16 g / 60,06g /139,62g) et le mélange pulvérulent ainsi formé, chauffé 3 jours à l'étuve à 80°C. Le produit est filtré à chaud (80°C) de manière à éliminer les insolubles. Le DES ainsi obtenu, est ensuite chauffé à 150°C sous agitation dans un ballon bicol connecté à une ampoule à solide contenant 100g de P₂O₅. L'absence de tension de vapeur permet de travailler en milieu fermé. Le P₂O₅ est dédié notamment à piéger les résidus d'H₂O. Le DES obtenu est caractérisé avec un point de fusion de 74°C.

### Exemple 2 : Test de la capacité du DES de l'exemple 1 à filtrer l'acétaldéhyde et du toluène.

La solution de DES de l'exemple 1 est introduite dans un flacon de 1000 ml fermé avec un tube d'arrivée de gaz et un tube de sortie pour l'analyse du gaz. Le tube d'arrivée de gaz plonge jusqu'au fond du récipient et se termine par un fritté de barbotage (immergé dans le DES). Afin d'augmenter le temps de séjour du gaz dans le DES, 300g de billes de verre de diamètre 4mm sont disposées dans le flacon. Le tout est chauffé à 65°C par le biais d'un bain d'huile de silicone à 65°C.
L'ensemble du dispositif est exposé à
1h20 de thermalisation à 65°C
2h30 de bullage en air sec (0% d'humidité) à 0,5 l/min
2h de barbotage dans le DES d'un mélange de deux polluants gazeux à savoir acétaldéhyde à 0,1l/min, concentration à 5 ppm et toluène à 0,1l/min, concentration à 5 ppm associé à un débit d'air sec de 0,3 l/min.

Il est constaté une adsorption totale et sélective de l'acétaldéhyde par chromatographie gazeuse.

### Exemple 3 : Préparation d'un DES dopé avec de l'hydroxyde de calcium

Du n-butyl-urée, de l'urée et du chlorure de choline sont mélangés en quantité équimolaire (116,16 g / 60,06g /139,62 g) et étuvés pour homogénéisation à 90°C pendant 3 heures.

Ce DES est chargé par hydrolyse in situ d'un alcoxyde de Calcium Ca(OMe)₂ obtenu au préalable par réaction de méthanol anhydre sur du Ca métal. Après solubilisation du Ca(OMe)₂ dans le DES, il y est introduit de l'eau à raison de 3 équivalents molaires d'H₂O par atome de Ca. L'hydrolyse in situ permet d'obtenir de très petites particules d'hydroxyde de Calcium très fines (200 à 300 nm au MEB) et ainsi de générer une suspension colloïdale de DES dopé à 3,5% massique en Ca(OH)₂ .

La température de fusion du DES dopé reste inchangée par rapport à celle manifestée par un DES de même nature chimique mais non dopé (74°C).

### Exemple 4 : Test de la capacité du DES de l'exemple 3 à piéger du NOx

Du NOx gazeux est généré par attaque acide d'une feuille d'aluminium alimentaire placée dans un ballon tricol. L'aluminium alimentaire est traité en face intérieure par un vernis PVC contact alimentaire et en face extérieure d'un vernis cellulosique (printing). Le ballon est placé sous balayage d'argon, et connecté à un bulleur contenant 70g du DES dopé Ca(OH)₂ selon l'exemple 2, chauffé à 80°C. La connexion au bulleur se fait par un raccord en Y dont une des branches peut-être plus ou moins fermée par une pince de Mohr et qui conduit à une fiole d'eau. Ce montage permet ainsi de ne faire passer qu'un 1/3 de l'argon chargé en NOx sur le DES dopé.

L'ajout d'HNO₃ concentré provoque une réaction violente avec génération de NOx, les vapeurs rousses de NO₂ sont observables. Environ 1/3 des NOx générés passent sur le DES dopé. Celui-ci reste incolore, on ne note pas de formation de précipité et la viscosité n'est pas modifiée. Le débit d'argon est de 100ml par minute.

Le DES dopé après passage de NOx gazeux pendant 1 heure est prélevé, et il est réalisé une analyse IR Raman sur un échantillon du DES (Raman System Agiltron Inc. 785 nm).

Il est constaté la présence d'une forte bande à 1050 cm⁻¹ correspondant à une vibration Ca-NO₃ Il y a donc bien eu un piégeage efficace des NOx par le DES dopé. Par ailleurs, il n'est pas observé de montée de fluorescence par rapport au spectre de base. Cette observation confirme l'inertie chimique du DES vis-à-vis du NO₂.

### Exemple 5 : Préparation d'un DES acide décanoïque/amine quaternisée dopé en éthoxyde de calcium

48,8g d'acide décanoique et 71,22g de bromure de tetraoctylammonium sont mélangés. Le mélange pulvérulent ainsi formé est chauffé 3 jours à l'étuve à 80°C dans un récipient fermé. Le produit est filtré à chaud (80°C) de manière à éliminer les insolubles. Le DES ainsi obtenu, est ensuite chauffé à 150°C sous agitation dans un ballon bicol connecté à une ampoule à solide contenant 100g de P₂O₅. L'absence de tension de vapeur permet de travailler en milieu fermé. Le P₂O₅ est dédié notamment à piéger les résidus d'H₂O, et permettra de déterminer précisément le point de fusion de ce DES. Après synthèse, le DES est conservé à l'étuve à 120°C.

On ajoute ensuite à 50g de ce DES, 2,7 g de Ca(OC₂H₅)₂ pour former du DES dopé à 5% massique Ca(OC₂H₅)₂ (0,33% massique en calcium). Il n'y a pas d'impact sur le point de fusion du DES qui demeure entre 47°C et 50°C.

### Exemple 6 : Préparation d'un DES acide décanoïque/amine quaternisée dopé en éthoxy

### de calcium solvaté

Ce DES est préparé selon le mode opératoire décrit en exemple 3. Pour disperser, l'hydroxyde de calcium (solvaté par le 2-Ethylhexanol) dans le DES hydrophobe de l'exemple 3, on utilise les ultrasons, le produit final est un liquide légèrement opaque dont le point de fusion se situe entre 47-50°C. Le titre massique en calcium final est de 0,5% massique, le titre massique théorique en eau est de 0,45%.

Sur ce DES dopé en une forme de calcium hydrolysé, il est réalisé l'expérience de bullage d'argon solvaté détaillée en exemple 3 par passage de 120g d'eau entrainés par bullage d'argon à 25-30°C. La reprise en eau du DES dopée n'est également pas constatée.

Ce DES hydrophobe dopé en Ca(OH)₂,H₂O est tout particulièrement utile pour le piégeage sélectif des NOx de l'air c'est à dire sans piéger également l'eau atmosphérique.

### Exemple 7 : Immobilisation d'un DES sur un support poreux de silice

100 g d'un DES hydrophobe de point de fusion de 75°C et composé d'un mélange molaire d'acide décanoique/bromure de tetraoctyleammonium dans un rapport molaire acide décanoique/bromure de tetraoctylammonium, de ½ est préparé par mélange de 85,4g de bromure de tetraoctylammonium avec 14,6g d'acide décanoique.

Des tubes de silices de 0,5 µm de diamètre et de 15µm de longueur sont chargés en ce DES. Pour ce faire, des tubes de silice (0,3 µm de diamètre et 150 µm de longueur ; synthétisés d'après la publication [5] subissent 3 cycles pression dépression ( 3 bar gaz neutre, vide : 10⁻² mmHg), sont ensuite trempés dans l'eau puis maintenus 10 minutes dans un bain à ultrason. Par cette technique, l'eau confine le DES hydrophobe à l'intérieur des tubes et les ultrasons détachent les résidus de surface. Après séchage à 70°C, la prise de masse des tubes est entre 10 et 15% en poids. Les tubes ainsi chargés sont chauffés à 77°C pendant une demi-heure, puis subissent à nouveau un traitement ultra-son de 5 minutes dans l'eau et un nouveau séchage à 70°C. Il est constaté par pesée des tubes que les masses restent inchangées. Le DES même après un passage à une température supérieure à sa température de fusion reste bien efficacement piégé dans les tubes.

### Liste des documents cités

[1] G.R.T. Jenkin, A.Z.M. Al-Bassam, R.C. Harris, A.P. Abbott, D.J. Smith, D.A. Holnell, R.J. Chapman,C.J. Stanley, Mineral Engineering, 87, (2016), 18-24.
[2] E.L. Smith ,A.P. Abbott, K.S. Ryder, Chem. Rev. 2014, 114, 11060-11082.
[3] Q. Zhang, K. de Oliveira Vigier, S. Royer, F. Jérôme, Chem Soc. Rev., 2012, 41, 7108-7146.
[4] L.I.N. Tomé, V. Baiao, W. da Silva, C. M. A. Brett, Applied materials Today (10) 2018, 30-50.
[5] H. Nakamura, Y. Matsui, J. Am.Chem.Soc., 1995, 117, 2651-2652,
[6] J. Mao, Y. Ma, L. Zang, R. Xue, C. Xiao, D. Ji, AAQR, (20) 2020, 203-215.

## Revendications

1. Élément de filtration utile pour piéger un ou plusieurs polluants gazeux, en particulier choisis parmi les NOx, SO₂, aldéhydes et cétones, ledit élément de filtration comportant au moins un solvant eutectique profond (DES) possédant un point de fusion supérieur ou égal à 45°C, en particulier supérieur à 60°C, et un support solide sur lequel est immobilisé ledit DES avec ledit élément étant configuré pour chauffer ledit DES à une température propice à sa fusion.

2. Élément selon la revendication 1 **caractérisé en ce qu'**il est configuré pour chauffer ou permettre de chauffer tout ou partie du DES par convection, conduction et/ou par rayonnement et de préférence par convection.

3. Élément selon la revendication 1 ou 2 **caractérisé en ce que** ledit support est formé d'au moins un matériau de conductivité thermique d'au moins 0,5 W/(m.K), en particulier d'au moins 1 W/(m.K), plus particulièrement d'au moins 10 W/(m.K), encore plus particulièrement d'au moins 80 W.(m.K), voire d'au moins 200 W/(m.K).

4. Élément selon l'une quelconque des revendications précédentes dans lequel le matériau constitutif dudit support est choisi parmi les zéolithes, à base d'alumine et/ou de silice, la silice, l'alumine, les fibres naturelles, notamment creuses, comme par exemple les fibres naturelles de type Kapoc, ou les fibres synthétiques, comme par exemple les fibres de polyester ou de polyamide, les métaux et alliages métalliques, de préférence parmi les zéolithes, la silice, l'alumine, les métaux et les alliages métalliques.

5. Élément selon l'une quelconque des revendications précédentes dans lequel le matériau constitutif dudit support se présente sous la forme de particules, de filaments, de plaquettes, d'un fritté, d'un tissé, d'un fil, d'une surface plane, d'une mousse ou d'un grillage, de préférence sous la forme de particules.

6. Élément selon l'une quelconque des revendications précédentes **caractérisé en ce qu'**il comprend, en outre un élément chauffant, notamment en un alliage choisi parmi le nichrome et le cupronickel.

7. Élément selon l'une quelconque des revendications précédentes dans lequel ledit DES est hydrophobe.

8. Élément selon l'une quelconque des revendications précédentes dans lequel ledit DES est à l'état solide ; ou tout ou partie dudit DES est à l'état fondu.

9. Élément selon l'une quelconque des revendications précédentes dans lequel ledit DES comprend à titre de composant dit donneur d'hydrogène (HBD), au moins un acide hydrocarboné saturé de point de fusion variant de 30°C à 70°C, en particulier choisi parmi les acides décanoïque, laurique et palmitique et leurs mélanges.

10. Élément selon l'une quelconque des revendications précédentes dans lequel ledit DES comprend à titre de composant dit accepteur d'hydrogène (HBA), au moins un composé choisi parmi les halogénures de tetraalkyle d'ammonium, les alkanolamides, et leurs mélanges.

11. Élément selon l'une quelconque des revendications précédentes dont ledit DES est chargé avec au moins un composé choisi parmi :
- les alcoxydes en C₁ à C₈ d'un métal de transition ou du groupe III,
- les carboxylates en C₃ à C₁₆ d'alcalino-terreux de préférence calcium ou magnésium, de métaux du groupe III de préférence l'aluminium, ou de métaux de transition de préférence le titane ou le zirconium,
- les hydroxydes d'alcalino-terreux, de métaux du groupe III de préférence l'aluminium, de lanthanides ou de métaux de transition et
- les carbonates d'alcalino-terreux de préférence calcium ou magnésium.

12. Élément selon l'une quelconque des revendications précédentes dont ledit DES est dopé avec au moins un alcoxyde de calcium.

13. Cartouche de filtration d'air comportant au moins un élément selon l'une quelconque des revendications 1 à 12, en particulier adaptée pour être traversée par de l'air à purifier.

14. Cartouche selon la revendication 13 incluant un moyen de chauffage adapté pour chauffer jusqu'à fusion tout ou partie du DES dudit élément.

15. Utilisation d'un élément selon l'une quelconque des revendications précédentes 1 à 12 ou d'une cartouche selon l'une quelconque des revendications 13 à 14 pour purifier un air ambiant et notamment dans un environnement domestique.

16. Procédé de purification d'air comprenant la mise en contact de l'air à purifier avec le DES d'un élément de filtration selon l'une quelconque des revendications 1 à 12.

17. Procédé selon la revendication précédente comprenant au moins les étapes consistant à
a) Disposer d'un élément de filtration selon l'une quelconque des revendications 1 à 12,
b) Mettre en contact tout ou partie du DES dudit élément avec un flux d'air et
c) Chauffer tout ou partie du DES jusqu'à fusion,
l'étape c) étant réalisée de manière non continue,
ledit procédé alternant en particulier des étapes de chauffage dudit DES pour le porter à un état fondu avec des étapes de refroidissement pour rétablir le DES fondu à un état solidifié.

18. Ensemble de purification d'air comportant au moins
- une enceinte comprenant une entrée d'air pour le passage d'un air pollué et une sortie d'air pour le passage d'un air purifié,
- un système de ventilation pour imposer une circulation d'air forcée entre l'entrée d'air et la sortie d'air,
- au moins un élément de filtration selon l'une quelconque des revendications 1 à 12 logé dans ladite enceinte de manière à être traversé par de l'air circulant entre l'entrée d'air et la sortie d'air, ledit élément de filtration étant en particulier mis en oeuvre sous la forme d'une cartouche amovible, notamment telle que définie dans l'une quelconque des revendications 13 à 14, et
- le cas échéant, au moins un moyen de chauffage configuré pour chauffer jusqu'à fusion, tout ou partie du DES de l'élément de filtration, ledit moyen de chauffage étant en particulier une source IR et/ou un élément métallique chauffable par effet Joule, disposé(s) dans ladite enceinte,.

19. Ensemble selon la revendication 18 comportant en outre un module de filtration particulaire disposé en amont dudit élément et/ou un capteur annexe de NOx situé en aval de l'élément de filtration.

## Patentansprüche

1. Filterelement, das nützlich ist, um ein oder mehrere gasförmige Schadstoffe aufzufangen, die insbesondere unter den NOx, SO₂, Aldehyden und Ketonen gewählt sind, wobei das Filterelement mindestens ein stark eutektisches Lösungsmittel (DES), das einen Schmelzpunkt größer oder gleich 45 °C, insbesondere größer als 60 °C besitzt, und ein fester Träger, auf dem das DES immobilisiert ist, beinhaltet, und wobei das Element dazu ausgestaltet ist, das DES auf eine für sein Schmelzen günstige Temperatur zu erwärmen.

2. Element nach Anspruch 1, **dadurch gekennzeichnet, dass** es dazu ausgestaltet ist, das ganze oder einen Teil des DES durch Konvektion, Leitung und/oder durch Strahlung und bevorzugt durch Konvektion zu erwärmen.

3. Element nach Anspruch 1 oder 2, **dadurch gekennzeichnet, dass** der Träger aus mindestens einem Material mit einer Wärmeleitfähigkeit von mindestens 0,5 W/(m.K), insbesondere mindestens 1 W/(m.K), in besonderer Weise mindestens 10 W/(m.K), in noch besonderer Weise mindestens 80 W/(m.K) oder sogar mindestens 200 W/(m.K) gebildet ist.

4. Element nach einem der vorhergehenden Ansprüche, bei dem das Material, aus dem der Träger besteht, unter den Zeolithen, auf Aluminiumoxid- und/oder Siliciumdioxidbasis, dem Siliciumdioxid, dem Aluminiumoxid, den Naturfasern, insbesondere hohlen, wie beispielsweise den Naturfasern vom Typ Kapok, oder den synthetischen Fasern wie beispielsweise den Polyester- oder Polyamidfasern, den Metallen und Metalllegierungen gewählt ist, bevorzugt unter den Zeolithen, dem Siliciumdioxid, dem Aluminiumoxid, den Metallen und den Metalllegierungen.

5. Element nach einem der vorhergehenden Ansprüche, bei dem das Material, aus dem der Träger besteht, in Form von Partikeln, Filamenten, Plättchen, eines Sintermaterials, eines Gewebes, eines Fadens, eines Flächengebildes, eines Schaums oder eines Gitters vorliegt, bevorzugt in Form von Partikeln.

6. Element nach einem der vorhergehenden Ansprüche, **dadurch gekennzeichnet, dass** es ferner ein Heizelement umfasst, insbesondere aus einer Legierung, die unter Nichrom und Kupfernickel gewählt ist.

7. Element nach einem der vorhergehenden Ansprüche, bei dem das DES hydrophob ist.

8. Element nach einem der vorhergehenden Ansprüche, bei dem das DES im festen Zustand ist; oder das ganze oder ein Teil des DES im geschmolzenen Zustand ist.

9. Element nach einem der vorhergehenden Ansprüche, bei dem das DES als sogenannte Wasserstoffdonorkomponente (HBD) mindestens eine gesättigte Kohlenwasserstoffsäure mit einem von 30 °C bis 70°C variierenden Schmelzpunkt umfasst, die insbesondere unter den Decan-, Laurin- und Palmitinsäuren und ihren Mischungen gewählt ist.

10. Element nach einem der vorhergehenden Ansprüche, bei dem das DES als sogenannte Wasserstoffakzeptorkomponente (HBA) mindestens eine Verbindung umfasst, die unter den Tetraalkylammonium-Halogeniden, den Alkanolamiden und ihren Mischungen gewählt ist.

11. Element nach einem der vorhergehenden Ansprüche, bei dem das DES mit mindestens einer Verbindung beladen ist, die gewählt ist unter:
- den C₁- bis C₈-Alkoxiden eines Übergangsmetalls oder Metalls der Gruppe III,
- den C₃- bis C₁₆-Carboxylaten von Erdalkalielementen, bevorzugt Calcium oder Magnesium, von Metallen der Gruppe III, bevorzugt Aluminium, oder von Übergangsmetallen, bevorzugt Titan oder Zirkonium,
- den Hydroxiden von Erdalkalielementen, von Metallen der Gruppe III, bevorzugt Aluminium, von Lanthanoiden oder von Übergangsmetallen und
- den Carbonaten von Erdalkalielementen, bevorzugt Calcium oder Magnesium.

12. Element nach einem der vorhergehenden Ansprüche, bei dem das DES mit mindestens einem Calciumalkoxid dotiert ist.

13. Luftfilterpatrone mit mindestens einem Element nach einem der Ansprüche 1 bis 12, die insbesondere geeignet ist, von zu reinigender Luft durchströmt zu werden.

14. Patrone nach Anspruch 13, die ein Heizmittel beinhaltet, das geeignet ist, das ganze oder einen Teil des DES des Elements bis zum Schmelzen zu erwärmen.

15. Verwendung eines Elements nach einem der vorhergehenden Ansprüche 1 bis 12 oder einer Patrone nach einem der Ansprüche 13 bis 14 zum Reinigen einer Umgebungsluft und insbesondere in einem häuslichen Umfeld.

16. Verfahren zum Reinigen von Luft, umfassend das Inkontaktbringen der zu reinigenden Luft mit dem DES eines Filterelements nach einem der Ansprüche 1 bis 12.

17. Verfahren nach dem vorhergehenden Anspruch, umfassend mindestens die Schritte, die in Folgendem bestehen:
a) Bereitstellen eines Filterelements nach einem der Ansprüche 1 bis 12,
b) Inkontaktbringen des ganzen oder eines Teils des DES des Elements mit einem Luftstrom und
c) Erwärmen des ganzen oder eines Teils des DES bis zum Schmelzen,
wobei der Schritt c) nicht kontinuierlich ausgeführt wird,
wobei das Verfahren insbesondere Schritte des Erwärmens des DES, um es in einen geschmolzenen Zustand zu versetzen, mit Schritten des Kühlens, um das geschmolzene DES in einen erstarrten Zustand zu versetzen, abwechselt.

18. Anordnung zum Reinigen von Luft, beinhaltend mindestens
- eine Kammer, die einen Lufteinlass zum Durchlassen einer verunreinigten Luft und einen Luftauslass zum Durchlassen einer gereinigten Luft umfasst,
- ein Belüftungssystem, um eine erzwungene Luftzirkulation zwischen dem Lufteinlass und dem Luftauslass herbeizuführen,
- mindestens ein Filterelement nach einem der Ansprüche 1 bis 12, das in der Kammer aufgenommen ist, so dass es von zwischen dem Lufteinlass und dem Luftauslass zirkulierender Luft durchströmt wird, wobei das Filterelement insbesondere in Form einer entnehmbaren Patrone, insbesondere wie in einem der Ansprüche 13 bis 14 definiert, eingesetzt wird, und
- gegebenenfalls mindestens ein Heizmittel, das dazu ausgestaltet ist, das ganze oder einen Teil des DES des Filterelements bis zum Schmelzen zu erwärmen, wobei das Heizelement insbesondere eine IR-Quelle und/oder ein durch den Joule-Effekt erwärmbares metallisches Element ist, das/die in der Kammer angeordnet ist/sind.

19. Anordnung nach Anspruch 18, beinhaltend ferner ein Partikelfiltermodul, das stromauf des Elements angeordnet ist, und/oder einen NOx-Zusatzsensor, der stromab des Filterelements gelegen ist.

## Claims

1. Filtration element useful for capturing one or more gaseous pollutants, in particular selected from NOx, SO₂, aldehydes and ketones, said filtration element comprising at least one deep eutectic solvent (DES) possessing a melting point of greater than or equal to 45°C, in particular greater than 60°C, and a solid support on which said DES is immobilized, with said element being configured to heat said DES to a temperature conducive to the melting thereof.

2. Element according to Claim 1, **characterized in that** it is configured to heat or make possible the heating of all or some of the DES by convection, conduction and/or by radiation, and preferably by convection.

3. Element according to Claim 1 or 2, **characterized in that** said support is formed of at least one material with a thermal conductivity of at least 0.5 W/(m.K), in particular at least 1 W/(m.K), more particularly at least 10 W/(m.K), more particularly still at least 80 W/(m.K), or even at least 200 W/(m.K).

4. Element according to any one of the preceding claims, in which the constituent material of said support is selected from zeolites, based on alumina and/or on silica, silica, alumina, natural fibres, especially hollow natural fibres, such as for example natural Kapok fibres, or synthetic fibres, such as for example polyester or polyamide fibres, metals and metal alloys, preferably from zeolites, silica, alumina, metals and metal alloys.

5. Element according to any one of the preceding claims, in which the constituent material of said support is in the form of particles, filaments, platelets, a frit, a woven fabric, a yarn, a flat surface, a foam or a grille, preferably in the form of particles.

6. Element according to any one of the preceding claims, **characterized in that** it comprises in addition a heating element, in particular made from an alloy selected from nichrome and cupronickel.

7. Element according to any one of the preceding claims, in which said DES is hydrophobic.

8. Element according to any one of the preceding claims, in which said DES is in the solid state, or all or some of said DES is in the molten state.

9. Element according to any one of the preceding claims, in which said DES comprises, as "hydrogen donor" (HBD) component, at least one saturated hydrocarbon-based acid with a melting point ranging from 30°C to 70°C, in particular selected from decanoic, lauric and palmitic acids and mixtures thereof.

10. Element according to any one of the preceding claims, in which said DES comprises, as "hydrogen acceptor" (HBA) component, at least one compound selected from tetraalkylammonium halides, alkanolamides, and mixtures thereof.

11. Element according to any one of the preceding claims, said DES of which is loaded with at least one compound selected from:
- C₁ to C₈ alkoxides of a transition or group III metal,
- C₃ to C₁₆ carboxylates of alkaline earth metals, preferably calcium or magnesium, of group III metals, preferably aluminium, or of transition metals, preferably titanium or zirconium,
- hydroxides of alkaline earth metals, of group III metals, preferably aluminium, of lanthanides or of transition metals, and
- carbonates of alkaline earth metals, preferably calcium or magnesium.

12. Element according to any one of the preceding claims, said DES of which is doped with at least one calcium alkoxide.

13. Air filtration cartridge comprising at least one element according to any one of Claims 1 to 12, in particular suitable for being traversed by the air to be purified.

14. Cartridge according to Claim 13, including a heating means suitable for heating all or some of the DES of said element until melting occurs.

15. Use of an element according to any one of the preceding Claims 1 to 12 or of a cartridge according to either one of Claims 13 and 14, for purifying ambient air, in particular in a domestic environment.

16. Process for purifying air, comprising bringing the air to be purified into contact with the DES of a filtration element according to any one of Claims 1 to 12.

17. Process according to the preceding claim, comprising at least the steps consisting in
a) providing a filtration element according to any one of Claims 1 to 12,
b) bringing all or some of the DES of said element into contact with a stream of air and
c) heating all or some of the DES until melting occurs, step c) being carried out in a non-continuous manner, said process alternating in particular steps of heating said DES to bring it into a molten state with steps of cooling to bring the molten DES back into a solidified state.

18. Air purification assembly, comprising at least
- a chamber comprising an air inlet for the passage of polluted air and an air outlet for the passage of purified air,
- a ventilation system for imposing a forced circulation of air between the air inlet and the air outlet,
- at least one filtration element according to any one of Claims 1 to 12, housed in said chamber so as to be traversed by the air circulating between the air inlet and the air outlet, said filtration element being in particular implemented in the form of a removable cartridge, especially as defined in either one of Claims 13 and 14, and
- where appropriate, at least one heating means configured to heat all or some of the DES of the filtration element until melting occurs, said heating means being in particular an IR source and/or a metallic element that can be heated by the Joule effect, disposed in said chamber.

19. Assembly according to Claim 18, additionally comprising a particulate filtration module disposed upstream of said element and/or an ancillary NOx sensor situated downstream of the filtration element.
